(19) Europäisches Patentamt / European Patent Office / Office européen des brevets

(11) **EP 2 172 735 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(51) Int Cl.:
**G01B 3/00** *(2006.01)*       **G01B 21/04** *(2006.01)*
**G01B 5/004** *(2006.01)*

(21) Anmeldenummer: **09012463.7**

(22) Anmeldetag: **01.10.2009**

(54) **Verfahren zum Bestimmen einer Nachgiebigkeitsmatrix eines dreidimensionalen Messwertgebers für beliebige Orientierungen**

Method for determining a resilience matrix of a three dimensional sensor for arbitrary orientations

Procédé de détermination d'une matrice d'élasticité d'un senseur tridimensionnel pour orientations arbitraires

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.10.2008 DE 102008049751**

(43) Veröffentlichungstag der Anmeldung:
**07.04.2010 Patentblatt 2010/14**

(73) Patentinhaber: **Carl Zeiss Industrielle Messtechnik GmbH**
**73447 Oberkochen (DE)**

(72) Erfinder: **Kunzmann, Steffen Dr.**
**01279 Dresden (DE)**

(74) Vertreter: **Duhme, Torsten et al**
**Witte, Weller & Partner**
**Patentanwälte**
**Postfach 10 54 62**
**70047 Stuttgart (DE)**

(56) Entgegenhaltungen:
**EP-A2- 1 279 918      EP-B1- 1 051 596**
**WO-A1-2004/106854      DD-A1- 140 788**
**DE-A1- 19 724 739      DE-A1-102004 011 728**
**US-A- 5 610 846**

**Beschreibung**

Die vorliegende Erfindung betrifft ein Verfahren zum Bestimmen einer Nachgiebigkeitsmatrix $\underline{M}$ eines mit einer Tastspitze versehenen Sensors eines Koordinatenmessgeräts, wobei die Tastspitze in mehrere Orientierungen ausrichtbar ist und das Koordinatenmessgerät derart kalibriert ist, dass eine Position der Tastspitze mittels des Sensors bestimmbar ist.

Des Weiteren betrifft die vorliegende Erfindung ein Computerprogramm und ein System zum Durchführen eines Verfahrens zum Bestimmen einer Nachgiebigkeitsmatrix.

Bisher sind lediglich Verfahren zur Kalibrierung eines Tasters bekannt, bei denen für jede Orientierung des Sensors eine neue Kalibrierung des Sensors an einer Einmesskugel durchgeführt und eine Transformationsmatrix zur Überführung von Messdaten des Sensors in Positionsdaten des Tasters bestimmt wird. Ein derartiges Verfahren zeigt beispielsweise die Druckschrift WO 2004/106854 Al.

Ein ähnliches Kalibrierverfahren zeigt auch die Druckschrift EP 1 279 918 A2. Dort wird zudem eine Elastizitätsmatrix eines Taststiftes während eines Antastvorgangs, d.h. für eine an der Spitze des Taststiftes angreifenden Kraft, durch Antasten einer Kalibrierkugel in einem absoluten Koordinatensystem bestimmt.

Auch die Druckschrift U 5 610 846 A zeigt ebenfalls eine solche Bestimmung einer Elastizitätsmatrix in einem absoluten Koordinatensystem, bei der zudem die Elastizitätsmatrix des aus Portal, Schlitten und Pinole bestehenden Halterungsaufbaus bestimmt werden kann.

Dreidimensionale Koordinatenmessgeräte werden in weiten Bereichen der industriellen Messtechnik verwendet, um Objekte taktil unter höchsten Genauigkeitsanforderungen zu vermessen. Dabei weist das Koordinatenmessgerät einen Sensor auf, der mittels geeigneter Verschiebeeinrichtungen dreidimensional in einem absoluten Koordinatensystem (X, Y, Z) bewegbar ist. Der Sensor umfasst des Weiteren eine dreidimensional auslenkbare Tastspitze, deren Auslenkung mittels des Sensors erfasst werden kann. Sensor und Tastspitze werden zusammen auch als Tastkopf bezeichnet. Ein Ausführungsbeispiel für einen solchen Tastkopf für ein Koordinatenmessgerät ist in der Druckschrift DE 10 2004 011 728 A1 beschrieben.

Häufig ist der Tastkopf nicht starr an dem Koordinatenmessgerät befestigt, sondern mittels einer Dreh-Schwenk-Einheit (DSE) in eine beliebige Orientierung ausrichtbar. Zwar ist in der Regel kein stufenloses Ausrichten des Tastkopfs möglich, die Stufen, in denen eine Ausrichtung erfolgen kann, sind jedoch so fein gewählt, dass insgesamt mehrere tausend Orientierungen des Tastkopfs in dem absoluten Koordinatensystem (X, Y, Z) möglich sind.

Um die Genauigkeitsanforderungen an die Messergebnisse zu erfüllen, muss in jeder Orientierung eine Kalibrierung des Sensors erfolgen. Durch die Kalibrierung wird eine Transformationsmatrix $T$ bestimmt, mittels der die Messwerte des Sensors unter Berücksichtigung der Position einer Verschiebeeinrichtung bzw. der DSE in die Position der Tastspitze in dem absoluten Koordinatensystem (X, Y, Z) umgerechnet werden können.

Der Begriff "Tastspitze" ist dabei ohne Einschränkung der Geometrie zu verstehen. Synonym könnte auch beispielsweise der Begriff "Taststift" verwendet werden. In der Regel weist die Tastspitze an ihrem Ende eine Kugel auf, je nach Anwendungsfall kann die Tastspitze jedoch auch als Stabelement oder mit sich verjüngendem Querschnitt ausgebildet sein, so dass an dem Ende der Tastspitze auch tatsächlich eine Spitze ausgeformt ist.

Zunächst war für jede mögliche Orientierung des Tastkopfs eine separate Kalibrierung des Koordinatenmessgeräts notwendig. Dies hatte zur Folge, dass bei einer Veränderung der Orientierung des Tastkopfs eine erneute Kalibrierung durchgeführt werden musste. Aus diesem Grund wurde eine sog. RDS-CAA-Kalibrierung vorgeschlagen, bei der der Tastkopf zunächst in einer bestimmten Anzahl verschiedener Orientierungen kalibriert wird, dann aber anhand dieser ermittelten Kalibrierungsdaten die entsprechenden Transformationsmatrizen für die übrigen Orientierungen errechnet und abgespeichert werden können. Ein solches Verfahren ist beispielsweise in der Druckschrift EP 1 051 596 B1 beschrieben. Auf diese Weise entfällt während des praktischen Gebrauchs die Notwendigkeit einer Kalibrierung.

Weitere Koordinatenmessgeräte und Verfahren finden sich beispielsweise in den Druckschriften DE 197 24 739 A1 und DD 140 788 A.

Um die an die Ergebnisse der Messung gestellten Genauigkeitsanforderungen erfüllen zu können, muss des Weiteren bekannt sein, welcher Anteil einer Auslenkung der Tastspitze durch die auf die Tastspitze wirkende Gewichtskraft verursacht wird und welcher Anteil einer Auslenkung durch eine Antastkraft bewirkt wird, mit der die Tastspitze auf das zu vermessende Objekt gedrückt wird.

Die durch die Gewichtskraft bewirkte Auslenkung der Tastspitze aus einer gewichtsfreien Position wird auch als "Neutralposition" bezeichnet. Die Neutralposition ist von der Orientierung des Sensors sowie von der Masse, der Schwerpunktlage und den Dimensionen der Tastspitze sowie von den Rückstelleigenschaften des Sensors abhängig. Auch die durch eine Antastung eines Objekts hervorgerufenen Kräfte bzw. die bei einer bestimmten Antastkraft hervorgerufene Auslenkung ändern sich je nach Orientierung des Tastkopfs und den Eigenschaften der Tastspitze.

Bisher wird bei jeder Änderung der Orientierung des Tastkopfs eine gewisse Zeit gewartet, um eine Einschwingphase der Tastspitze abzuwarten und dann die Messwerte des Sensors als sogenannter "Eigengewichtsoffset" gespeichert. Durch Umrechnung mit der beispielsweise mittels der RDS-CAA-Kalibrierung bestimmten Transformationsmatrix *T* kann dann die Neutralposition der Tastspitze in dem absoluten Koordinatensystem (X, Y, Z) bestimmt werden. Soll während eines laufenden Antastvorgangs jedoch die Orientierung des Tastkopfs geändert werden, muss der Tastkopf von dem zu vermessenden Objekt abgesetzt werden, um die neue Neutralposition zu bestimmen. Es wäre jedoch von Vorteil, wenn auch diese Neutralposition der Tastspitze bereits vorberechnet werden könnte.

Im Falle der Nachgiebigkeitsmatrix für eine auf die Tastspitze wirkende Arbeitskraft ist die Nachgiebigkeitsmatrix für einen Standardtaster bekannt, so dass für diesen Standardtaster durch an der Tastspitze angreifende Antastkräfte hervorgerufene Auslenkungen berechnet bzw. aus einer bestimmten Auslenkung auf die Antastkraft zurückgerechnet werden kann. Wird die Tastspitze ausgetauscht oder geometrisch verändert, kann unter genauer Kenntnis der geometrischen Unterschiede zu dem Standardtaster die entsprechend neue Nachgiebigkeitsmatrix berechnet werden. Eine automatische Erkennung der genauen Eigenschaften der eingewechselten Tastspitze erfolgt jedoch nicht, so dass die Bestimmung einer neuen Nachgiebigkeitsmatrix basierend auf der Nachgiebigkeitsmatrix des Standardtasters mit einem hohen Aufwand behaftet und fehleranfällig ist. Es wäre daher grundsätzlich von Vorteil, wenn die Nachgiebigkeitsmatrix einer aktuellen Tastspitze einfach bestimmt und vorherberechnet werden könnte.

Es ist daher eine Aufgabe der vorliegenden Erfindung, ein Verfahren anzugeben, mit dem eine Neutralposition und eine durch eine Antastkraft hervorgerufene Auslenkung einer beliebigen Tastspitze in beliebiger Orientierung vorbestimmt werden kann, um so eine schnelle Änderung der Orientierung eines Tastkopfes, insbesondere während einer Antastung, zu ermöglichen.

Diese Aufgabe wird durch ein Verfahren, ein Computerprogrammprodukt und eine Vorrichtung mit den Merkmalen der unabhängigen Ansprüche 1, 9 und beziehungsweise 10 gelöst.

Zur Lösung der voranstehend gestellten Aufgabe wird gemäß einem ersten Aspekt der Erfindung vorgeschlagen, dass das eingangs genannte Verfahren gekennzeichnet ist durch die Schritte des Aufstellens eines durch Differenzieren einer Anfangsposition und einer Endposition gebildeten Auslenkungsvektors $\vec{D}$ der Tastspitze in einer ersten Orientierung in einem sensorfesten Koordinatensystem, wobei zumindest die Endposition der Tastspitze durch den Sensor bestimmt wird, des Bestimmens zumindest einer Richtung eines Vektors $\vec{F}$ einer den Auslenkungsvektor $\vec{D}$ bewirkenden Kraft in dem sensorfesten Koordinatensystem, des Bildens eines Satzes mehrerer Gleichungen in dem sensorfesten Koordinatensystem, wobei der Satz in eine Form $\vec{D} = \underline{M} \cdot \vec{F}$ bringbar ist und eine Anzahl von Unbekannten aufweist, des Wiederholens der voranstehenden Schritte in weiteren Orientierungen der Tastspitze, bis eine Anzahl der Gleichungen mindestens der Anzahl von Unbekannten entspricht, und des Bestimmens der Unbekannten durch Lösen der Gleichungen.

Der Vektor $\vec{D}$ entspricht also dem inneren Produkt der Matrix $\underline{M}$ und des Vektors $\vec{F}$. Das Gleichungssystem $\vec{D} = \underline{M} \cdot \vec{F}$ lässt sich somit wie folgt ausschreiben:

$$D_x = M_{11} \cdot F_x + M_{12} \cdot F_y + M_{13} \cdot F_z$$

$$D_y = M_{21} \cdot F_x + M_{22} \cdot F_y + M_{23} \cdot F_z$$

$$D_z = M_{31} \cdot F_x + M_{32} \cdot F_y + M_{33} \cdot F_z.$$

Durch das erfindungsgemäße Verfahren gemäß dem ersten Aspekt der Erfindung wird es ermöglicht, die Nachgiebigkeitsmatrix der Tastspitze anhand von in einer bestimmten Anzahl von Orientierungen ermittelter Sensordaten zu berechnen. Dabei kann die Nachgiebigkeitsmatrix entweder derart bestimmt werden, dass die Auslenkung der Tastspitze aufgrund einer nach Richtung und Betrag bekannten Kraft berechnet werden kann, oder dass die Nachgiebigkeitsmatrix speziell für eine Kraft eines bestimmten Betrags, beispielsweise die aufgrund der Masse der Tastspitze wirkende Gravitationskraft, bestimmt werden kann, wenn lediglich die Richtung der Kraft des bestimmten Betrags veränderlich ist.

Im Rahmen der Erfindung wird somit als "Nachgiebigkeitsmatrix" sowohl eine Nachgiebigkeitsmatrix im Sinne der klassischen Technischen Mechanik bezeichnet, d.h. eine Nachgiebigkeitsmatrix, die multipliziert mit einem Kraftvektor einen Auslenkungsvektor ergibt, als auch eine solche Nachgiebigkeitsmatrix bezeichnet, in die bereits ein bestimmter Betrag des Kraftvektors hineingerechnet ist.

Unter "Richtung" bzw. "Richtungsvektor" wird im Folgenden zusammengefasst sowohl die Richtung als auch die Orientierung im mathematischen Sinne eines Vektors bzw. einer Kraft verstanden.

Sind die entsprechenden Nachgiebigkeitsmatrizen für eine in dem Schwerpunkt der Tastspitze eingreifende Kraft und eine an einem Ende, d.h. am Antastpunkt, angreifende Kraft bekannt, kann unter Kenntnis einer wirkenden Kraft die Position der Tastspitze bestimmt werden, bzw. von einer durch den Sensor erfassten Auslenkung der Tastspitze auf die die Auslenkung bewirkende Kraft zurückgeschlossen werden.

Zur Bestimmung der Nachgiebigkeitsmatrizen können beispielsweise die während einer RDS-CAA-Kalibrierung ermittelten Daten verwendet werden, wobei die Daten mittels einer bekannten Transformationsmatrix $\underline{R}$ in ein sensorfestes Koordinatensystem transformiert werden. Auf diese Weise ist es möglich, die Daten der Kalibrierung des Tastkopfs in verschiedenen Orientierungen und an verschiedenen Orten des absoluten Koordinatensystems (X, Y, Z) miteinander zur Bestimmung der Nachgiebigkeitsmatrizen zu verwenden. Durch die Transformation von dem absoluten Koordinatensystem (X, Y, Z) in das sensorfeste Koordinatensystem sind die Ortsvektoren der Position der Tastspitze in verschiedenen Orientierungen des Tastkopfs in dem absoluten Koordinatensystem zueinander kompatibel. Lediglich die Richtungsvektoren der angreifenden Kräfte rotieren.

Mittels der Transformationsmatrix $\underline{R}$ lässt sich dann eine in dem sensorfesten Koordinatensystem bestimmte Nachgiebigkeitsmatrix in das absolute Koordinatensystem (X, Y, Z) transformieren.

Sind die Nachgiebigkeitsmatrizen bekannt, ist es möglich, die durch einen Schwerpunkt angreifende Gewichtskraft oder eine im Antastpunkt angreifende Antastkraft bewirkte Auslenkung der Tastspitze für eine beliebige Orientierung des Tastkopfs zu berechnen. Auf diese Weise wird erreicht, dass beispielsweise kein berührungsfreier Einschwingvorgang der Tastspitze abgewartet werden muss, um ein Eigengewichtsoffset der Tastspitze zu speichern. Der Eigengewichtsoffset kann vorab für alle Orientierungen vorausberechnet werden. Des Weiteren kann während einer Kraftbeaufschlagung des Antastpunktes die Orientierung des Tastkopfes geändert werden, wobei die durch die Orientierung veränderte Auslenkung der Tastspitze aufgrund der Antastkraft vorausberechnet werden kann.

Die so in dem sensorfesten Koordinatensystem bestimmten Auslenkungen lassen sich wiederum mittels der Transformationsmatrix $\underline{R}$ in das absolute Koordinatensystem (X, Y, Z) transformieren. Von hier aus lassen sich die Auslenkungen dann mittels der durch die RDS-CAA-Kalibrierung gewonnene Transformationsmatrix $\underline{T}$ in entsprechende Sensormesswerte transformieren, so dass ein Messergebnis korrigiert werden kann.

Auf diese Weise ist es insbesondere möglich, während eines Antastens die Orientierung des Tastkopfes zu ändern und den Messvorgang kontinuierlich fortzusetzen. Ein Absetzen der Tastspitze von dem zu vermessenden Objekt, um beispielsweise den Eigengewichtsoffset in der neuen Orientierung zu bestimmen, ist nicht mehr notwendig. Des Weiteren ist es möglich, von einer durch die Antastung hervorgerufenen Auslenkung der Tastspitze auf die ausgeübte Kraft zu schließen.

Gemäß einem zweiten Aspekt der Erfindung wird ein Computerprogrammprodukt mit Programmcodemitteln bereitgestellt, die auf einem computerlesbaren Datenträger gespeichert sind, um ein Verfahren gemäß dem ersten Aspekt der Erfindung durchzuführen, wenn das Computerprogramm auf einem Computer oder einer entsprechenden Recheneinheit ausgeführt wird.

Gemäß einem dritten Aspekt der Erfindung wird ein System zum Bestimmen einer Nachgiebigkeitsmatrix eines mit einer Tastspitze versehenen Sensors eines Koordinatenmessgeräts vorgeschlagen, wobei das System das Koordinatenmessgerät, eine Steuerungseinheit zum Steuern des Koordinatenmessgeräts und eine Kraftmesseinrichtung aufweist, die gemessene Kräfte an die Steuerungseinheit ausgibt, wobei die Steuerungseinheit derart ausgestaltet ist, dass sie ein Verfahren gemäß einem ersten Aspekt der Erfindung ausführt.

Das Computerprogrammprodukt gemäß dem zweiten Aspekt der Erfindung und das System gemäß dem dritten Aspekt der Erfindung weisen somit die gleichen Vorteile wie das Verfahren gemäß dem ersten Aspekt der Erfindung auf.

Die eingangs gestellte Aufgabe wird somit vollkommen gelöst.

Gemäß einer bevorzugten Weiterbildung der Erfindung ist die Nachgiebigkeitsmatrix $\underline{M}$ eine durch eine in einem Schwerpunkt der Tastspitze angreifende Gravitationskraft bewirkte Gewichts-Auslenkungsmatrix $\underline{A}$, der Vektor $\vec{F}$ ein normierter Richtungsvektor $\vec{G}$ der Gravitationskraft, die Endposition eine Neutralposition $\vec{P}$ der Tastspitze und die Anfangsposition eine unbekannte gewichtsfreie Position $\vec{O}$ der Tastspitze, so dass sich für jeden Satz mehrerer Gleichungen eine Form $\vec{P} = \underline{A} \cdot \vec{G} + \vec{O}$ ergibt, und wobei die Schritte des Aufstellens, des Bestimmens und des Bildens mindestens vier Orientierungen durchgeführt werden.

In dieser bevorzugten Weiterbildung des Verfahrens gemäß dem ersten Aspekt der Erfindung wird das Verfahren dazu verwendet, eine durch das Eigengewicht der Tastspitze verursachte Auslenkung in beliebiger Orientierung zu bestimmen. Somit ist dann der Eigengewichtsoffset in jeder Orientierung bekannt.

Beispielsweise kann dazu während der RDS- CAA- Kalibrierung, wenn eine Kalibrierung für eine bestimmte Orientierung stattgefunden hat, die Tastspitze von der Einmesskugel weggefahren werden, ein Einschwingvorgang abgewartet werden und die Daten des Sensors erfasst werden. Die während der Kalibrierung ermittelte Transformationsmatrix $\underline{T}$ wird dann dazu verwendet, die Sensordaten in die Neutralposition $\vec{P}$ der Tastspitze umzurechnen. Für eine bestimmte Orientierung ist dann somit die Neutralposition $\vec{P}$ der Tastspitze bekannt. Dieses wird in vier Orientierungen durchgeführt. Die Auslenkung in die Neutralposition $\vec{P}$ aufgrund der Gewichtskraft erfolgt in jeder Orientierung von einer gewichtsfreien Position $\vec{O}$ aus. Diese gewichtsfreie Position $\vec{O}$ ist unbekannt. Sie ist jedoch in einem sensorfesten Koordinatensystem in jeder Orientierung gleich. Daher werden die vier in verschiedenen Orientierungen ermittelten Neutralpositionen in ein sensorfestes Koordinatensystem transformiert. Die Auslenkung in die Neutralposition geht dann in dem sensorfesten Koordinatensystem immer von der gleichen Position $\vec{O}$ aus.

Die nun bekannten Neutralpositionen $\vec{P}$ ergeben sich nach der Gleichung $\vec{P} = \underline{A} \cdot \vec{G} + \vec{O}$. Dabei ist $\underline{A}$ die Gewichts-Auslenkungsmatrix und $\vec{G}$ ein auf den Betrag 1 normierter Richtungsvektor der Gravitationskraft. Der tatsächliche, Betrag der Gravitationskraft findet sich somit in der Gewichts-Auslenkungsmatrix $\underline{A}$ wieder. Der Richtungsvektor $\vec{G}$ ist für jede Orientierung in dem sensorfesten Koordinatensystem bekannt. Des Weiteren verbleiben die gewichtsfreie Position $\vec{O}$ als Vektor mit drei Unbekannten und die Gewichts-Auslenkungsmatrix $\underline{A}$ als Matrize mit neun Unbekannten, insgesamt also zwölf Unbekannte.

Für jede Orientierung mit bekannter Neutralposition $\vec{P}$ und bekanntem Gravitations-Richtungsvektor $\vec{G}$ ergibt sich ein Satz von drei Gleichungen, jeweils eine Gleichung in X-, Y- und Z-Richtung des sensorfesten Koordinatensystems.

Bei einer Anzahl von N Neutralpositionen $P_{1,x}$ bis $P_{N,x}$ ergibt sich dann beispielsweise in X-Richtung der folgende Satz Gleichungen:

$$P_{1,x} = M_{11} \cdot G_{1,x} + M_{12} \cdot G_{1,y} + M_{13} \cdot G_{1,z} + O_x$$

$$P_{2,x} = M_{11} \cdot G_{2,x} + M_{12} \cdot G_{2,y} + M_{13} \cdot G_{2,z} + O_x$$

$$P_{3,x} = M_{11} \cdot G_{3,x} + M_{12} \cdot G_{3,y} + M_{13} \cdot G_{1,z} + O_x$$

$$\ldots$$

$$P_{N,x} = M_{11} \cdot G_{N,x} + M_{12} \cdot G_{N,y} + M_{13} \cdot G_{N,z} + O_x$$

Ein entsprechender Gleichungssatz ergibt sich auch in Y-Richtung und in Z-Richtung. Um die zwölf Unbekannten exakt bestimmen zu können, müssen somit in vier Orientierungen Neutralpositionen $\vec{P}$ und dazugehörige Gravitations-Richtungsvektoren $\vec{G}$ bekannt sein, um einen Satz von zwölf Gleichungen mit den zwölf Unbekannten zu erhalten, so dass die Gleichungen exakt lösbar sind. Sind mehr als die benötigten vier Punkte und dazugehörigen Gewichtsvektoren bekannt, ist das Gleichungssystem überbestimmt und es muss bestmöglich gelöst werden.

Entsprechende mathematische Verfahren zur Lösung von überbestimmten Gleichungssystemen sind dem Fachmann bekannt und finden sich beispielsweise in der Literatur in "Gerhard Opfer, Numerische Mathematik für Anfänger. Eine Einführung für Mathematiker, Ingenieure und Informatiker. Vieweg, Braunschweig, 2002, ISBN 3528372656, Seite 240 ff."

Wurden die Gewichts-Auslenkungsmatrix $\underline{A}$ und die gewichtsfreie Position $\vec{O}$ in dem sensorfesten Koordinatensystem so bestimmt, kann allein unter Angabe des Gravitations-Richtungsvektors für eine beliebige Orientierung des Tastkopfs die Neutralposition $\vec{P}$ in dem sensorfesten Koordinatensystem bestimmt und mittels der entsprechenden Transformationsmatrix $\underline{R}$ in ein absolutes Koordinatensystem und von dort mittels der durch die RDS-CAA-Kalibrierung gewonnenen Transformationsmatrix $\underline{T}$ in entsprechende Sensorsignale und damit den Eigengewichtsoffset umgerechnet werden.

In einer alternativen Weiterbildung des Verfahrens gemäß dem ersten Aspekt der Erfindung ist die Nachgiebigkeitsmatrix $\underline{M}$ eine durch eine an der Tastspitze des Sensors angreifende Kraft $\vec{K}$ bewirkte Nachgiebigkeitsmatrix $\underline{N}$, wobei die Endpositionen eine durch eine Kraft $\vec{K}_2$ bewirkte Position $\vec{S}_2$ und die Anfangsposition eine durch eine Kraft $\vec{K}_1$ bewirkte Position $\vec{S}_1$ ist, wobei die Kraft $\vec{K}$ den Vektor $\vec{F}$ bildet und durch Differenzieren der Kräfte $\vec{K}_2$ und $\vec{K}_1$ in ihrer Richtung und in ihrem Betrag bestimmt wird, wobei eine Positionsdifferenz $\vec{S}$ eine Differenz der Positionen $\vec{S}_2$ und $\vec{S}_1$ ist und den Vektor $\vec{D}$ bildet, so dass sich für jeden Satz mehrerer Gleichungen eine Form $\vec{S} = \underline{N} \cdot \vec{K}$ ergibt, und wobei die Schritte des Aufstellens, des Bestimmens und des Bildens in mindestens drei Orientierungen durchgeführt werden.

Da eine Antastkraft nicht in dem Schwerpunkt der Tastspitze, sondern in einem Antastpunkt, der an einem Ende der Tastspitze liegt, angreift, ergibt sich für die Antastkräfte eine andere Nachgiebigkeitsmatrix als für die Gewichtskräfte.

Das Verfahren zur Bestimmung dieser Nachgiebigkeitsmatrix ähnelt jedoch dem zur Bestimmung der Gewichts-Auslenkungsmatrix.

Allerdings ist im vorliegenden Fall keine gewichtsfreie Position $\vec{O}$ zu bestimmen, sondern es wird eine aufgrund einer Kraftdifferenz bewirkte Auslenkungsdifferenz betrachtet. Vorliegend eine Differenz zwischen einer durch eine Kraft $\vec{K_2}$ bewirkten Position $\vec{S_2}$ als Endposition und einer durch eine Kraft $\vec{K_1}$ bewirkte Position $\vec{S_1}$ als Anfangsposition. Diese Auslenkungs- und Kraftdifferenzen sind linear, so dass eine Offsetposition nicht berücksichtigt werden muss.

Die Kräfte $K_2$ und $K_1$ müssen jedoch bestimmt werden, weil ihr Betrag variiert. Des Weiteren muss dafür Sorge getragen werden, dass die Kräfte $K_2$ und $K_1$ in einer vorbestimmten und bekannten Richtung wirken.

Dazu kann eine Kraftmesseinrichtung verwendet werden, wie beispielsweise eine Waage oder eine Kraftmessdose, verwendet, die eine Oberfläche aufweist und normal zu dieser Oberfläche wirkende Kräfte misst.

Diese Oberfläche wird in einer ersten Orientierung mit einer Kraft $\vec{K_1}$ angetastet und die Position $\vec{S_1}$ anhand der erfassten Sensordaten bestimmt. Die Antastung der Oberfläche erfolgt dabei exakt normal zu der Oberfläche, so dass der Richtungsvektor der auf die Antastspitze wirkenden Kraft in dem absoluten Koordinatensystem (X, Y, Z) bekannt und in das sensorfeste Koordinatensystem umgerechnet werden kann. Der Betrag der Kraft wird mittels der Kraftmesseinrichtung bestimmt, so dass der Kraftvektor $K_2$ bzw. $K_1$ gänzlich bekannt ist. Nun wird der Tastkopf bei gleichbleibender Orientierung weiter normal zu der Oberfläche der Kraftmesseinrichtung verfahren, so dass die Antastkraft erhöht wird. Die nun vorliegende Auslenkung $\vec{S_2}$ als Endposition wird anhand der erfassten Sensordaten bestimmt, ebenso wie der Betrag der nun wirkenden Kraft $K_2$.

Durch Differenzieren der Positionsvektoren $\vec{S_2}$ und $\vec{S_1}$ in dem sensorfesten Koordinatensystem und der Kraftvektoren $\vec{K_2}$ und $\vec{K_1}$ in dem sensorfesten Koordinatensystem erhält man einen ersten Satz Gleichungen $\vec{S} = \underline{N} \cdot \vec{K}$, wobei sich drei Gleichungen, jeweils eine in X-, Y- und Z-Richtung, ergeben. Die Nachgiebigkeitsmatrix $\underline{M}$ weist neun Unbekannte auf.

Entsprechend ist der voranstehend beschriebene Vorgang für zwei weitere Orientierungen zu wiederholen und die entsprechenden Gleichungen ebenfalls in dem sensorfesten Koordinatensystem aufzustellen. In dem sensorfesten Koordinatensystem sind die Anfangs- und Endpositionen miteinander kompatibel, es ändert sich nur der Richtungsvektor der an der Tastspitze angreifenden Kraft.

Zudem hat die Transformation in das sensorfeste Koordinatensystem den Vorteil, dass durch Verschwenken des Tastkopfs die Kraftangriffsrichtung in dem sensorfesten Koordinatensystem geändert werden kann. Würden die Berechnungen in dem absoluten Koordinatensystem (X, Y, Z) durchgeführt werden, müsste die absolute Richtung der Antastkraft geändert werden und somit die Kraftmesseinrichtung in ihrer Orientierung verändert oder aber mehrere Kraftmesseinrichtungen vorgesehen werden.

Wird der Vorgang für drei Orientierungen wiederholt, erhält man entsprechend neun Gleichungen, so dass die neun Unbekannten der Nachgiebigkeitsmatrix $\underline{N}$ exakt bestimmt werden können. Die so ermittelte Nachgiebigkeitsmamx $\underline{N}$ in dem sensorfesten Koordinatensystem kann problemlos auch an das absolute Koordinatensystem (X, Y, Z) mit der Transformationsmatix $\underline{R}$ transformiert werden.

Wird der Vorgang für mehr als drei Orientierungen wiederholt, erhält man ein überbestimmtes Gleichungssystem, das wie bereits voranstehend beschrieben mittels bekannter mathematischer Methoden bestmöglich gelöst werden kann.

Ist die Nachgiebigkeitsmatrix $\underline{N}$ einmal bestimmt, kann mittels einer vorgegebenen Antastkraft eine daraus resultierende Auslenkung der Tastspitze in einer beliebigen Orientierung berechnet werden. Wird die Nachgiebigkeitsmatrix invertiert, erhält man die sog. Steifigkeitsmatrix. Mit dieser Steifigkeitsmatrix kann von einer über den Sensor ermittelten Auslenkung auf die die Auslenkung bewirkende Antastkraft geschlossen werden.

Wird bei vorgegebener Antastkraft $\vec{K}$ über die Nachgiebigkeitsmatrix die resultierende Sensorauslenkung bestimmt, kann die Sensorauslenkung mittels der im Rahmen der RDS-CAA-Kalibrierung bestimmten Transformationsmatrix auf die entsprechenden Signale des Sensors zurückgeschlossen werden.

Somit wird es problemlos möglich, bei Antastungen mit einer bestimmten Antastkraft die Orientierung des Tastkopfs zu ändern.

Des Weiteren kann bei jeder Auslenkung die reale Messkraft in Betrag und Richtung bestimmt werden.

Wird eine Tastspitze ausgetauscht, kann mittels des Verfahrens nach der vorliegenden Weiterbildung des Weiteren schnell die Nachgiebigkeitsmatrix der neuen Tastspitze ermittelt werden.

In bevorzugter Weiterbildung kann vorgesehen sein, dass die Tastspitze des Sensors zumindest in der Position $\vec{S_2}$ normal auf eine Oberfläche einer Kraftmesseinrichtung gedrückt wird, wobei die entsprechenden Kräfte bestimmt und an das Koordinatenmessgerät übermittelt werden.

Ein entsprechendes Vorgehen vereinfacht den Aufbau der Kraftmesseinrichtung und der gesamten Kalibrierung. Die so gefundenen Ergebnisse sind genauer als solche, bei denen eine Kraftmesseinrichtung nicht nur den Betrag der Kraft, sondern auch ihre Richtung bestimmen muss.

In bevorzugter Weiterbildung kann vorgesehen sein, dass die Kraft $\vec{K_1}$ = 0 ist und die Position $\vec{S_1}$ eine Neutralposition $\vec{P}$ in der entsprechenden Orientierung entspricht.

Ist eine Neutralposition $\vec{P}$ bereits in jeder Orientierung des Tastkopfs bekannt, ist es ausreichend, die Oberfläche der Kraftmesseinrichtung normal lediglich mit einer bestimmten Kraft anzutasten, und die entsprechende Position $\vec{S}_2$ zu bestimmen. Für die Anfangsposition wird daher die Neutralposition $\vec{P}$ und die Kraft $\vec{K}_1$ = 0 verwendet.

Auf diese Weise kann das Bestimmen der Nachgiebigkeitsmatrix weiter beschleunigt werden.

In bevorzugter Weiterbildung kann vorgesehen sein, dass die Tastspitze parallel zu der Oberfläche der Kraftmesseinrichtung bewegt wird, wenn die Tastspitze auf die Oberfläche gedrückt wird und die Kräfte $\vec{K}_2$ bzw. $\vec{K}_1$ durch eine Mittlung bestimmt werden.

Die Richtung der Kräfte $\vec{K}_2$ und $\vec{K}_1$ auf der Oberfläche der Kraftmesseinrichtung ist jeweils nur bis auf einen Reibungskegel aus dem Haftreibungsbeiwert von der Oberfläche der Kraftmesseinrichtung und der Oberfläche der Tastspitze genau zu bestimmen. Durch das Bewegen der ausgelenkten Tastspitze in verschiedene Richtungen quer zur Oberfläche bzw. auf der Oberfläche der Kraftmesseinrichtung kann dieser Bereich genauer eingegrenzt werden bzw. das Signal der Kraftmesseinrichtung gemittelt werden und so der Einfluss der Haftreibung eliminiert werden.

Die Bestimmung der Nachgiebigkeitsmatrix wird so genauer.

In bevorzugter Weiterbildung kann vorgesehen sein, dass die erste Orientierung und die weiteren Orientierungen derart gewählt werden, dass sie nicht in einer Ebene liegen.

Werden die Orientierungen entsprechend gewählt, ist das erfindungsgemäße Verfahren weit weniger fehlerbehaftet.

Wie bereits voranstehend erläuternd ausgeführt wurde, können die Schritte des Aufstellens eines Auslenkungsvektors $\vec{D}$, eines Bestimmens zumindest einer Richtung eines Vektors $\vec{F}$ und des Bildens eines Satzes mehrerer Gleichungen so oft wiederholt werden, bis die Anzahl der Gleichungen größer als die Anzahl der Unbekannten ist, wobei ein Bestimmen der Unbekannten mittels einer Methode der kleinsten Quadrate durchgeführt wird.

Die Methode der kleinsten Quadrate bietet ein besonders gutes Verfahren zum Minimieren der Fehler bei der Lösung eines überbestimmten Gleichungssystems. Die Gleichungen werden dabei bestmöglich so gelöst, dass die Summe der Fehlerquadrate der Differenzen zwischen den berechneten Werten der Positionen $\vec{P}$ bzw. $\vec{S}$ und den vorgegebenen Werten minimal wird. Bekannte mathematische Lösungsverfahren für Gleichungssysteme sind beispielsweise das Householder-Verfahren oder die Überführung in eine Normalgleichung.

Das erfindungsgemäße System nach einem dritten Aspekt der Erfindung kann in bevorzugter Weiterbildung derart ausgebildet sein, dass die Tastspitze ein erstes Material und die Oberfläche der Kraftmesseinrichtung aus einem zweiten Material gebildet ist und zwischen dem ersten Material und dem zweiten Material ein geringer Haftreibungskoeffizient vorliegt.

Auf diese Weise wird der Einfluss der Haftreibung bzw. der Haftreibungskegel klein und die Genauigkeit der Bestimmung der Nachgiebigkeitsmatrix größer.

Es versteht sich, dass, falls der Sensor zur Kalibrierung der Tastspitze eine Korrektur von Nichtlinearitäten besitzt, diese vorher bzw. zumindest gleichzeitig bestimmt werden muss.

Bei dem Datenträger, auf dem das Computerprogramm gemäß dem zweiten Aspekt der Erfindung gespeichert ist, kann es sich beispielsweise um eine Diskette, eine CD, eine DVD, eine Speicherkarte, einen USB-Stick oder eine BluRay-Disk handeln.

Ausführungsbeispiele der Erfindung sind in der Zeichnung dargestellt und werden in der nachfolgenden Beschreibung näher erläutert. Es zeigen:

Fig. 1     eine schematische Ansicht eines Systems gemäß einem dritten Aspekt der vorliegenden Erfindung,

Fig. 2     einen Tastkopf in einer Anordnung zur Durchführung eines Verfahrens gemäß dem ersten Aspekt der Erfindung in einer ersten Ausführungsform,

Fig. 3     einen Tastkopf in einer Anordnung zur Durchführung eines Verfahrens gemäß einem ersten Aspekt der Erfindung in einer zweiten Ausführungsform,

Fig. 4     einen Tastkopf in einer weiteren Anordnung zur Durchführung des Verfahrens gemäß dem ersten Aspekt der Erfindung in einer zweiten Ausführungsform,

Fig. 5     ein schematisches Ablaufdiagramm eines Verfahrens gemäß einem ersten Aspekt der Erfindung.

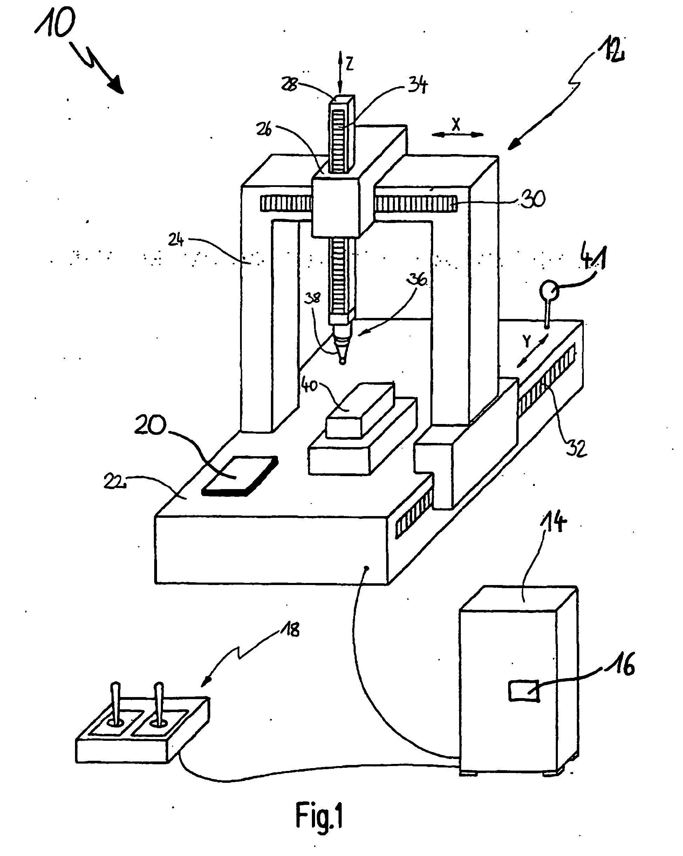

Fig. 1 zeigt ein System 10 zum Durchführen eines Verfahrens zur Bestimmung einer Nachgiebigkeitsmatrix. Das System 10 weist ein Koordinatenmessgerät 12 und eine Steuerungseinheit 14 zum Steuern des Koordinatenmessgeräts 12 auf. Die Steuerungseinheit 14 weist eine Recheneinheit 16, beispielsweise einen Computer, auf.

Die Steuerungseinheit 14 ist lediglich schematisch als Block dargestellt, grundsätzlich kann die Steuerungseinheit 14 alle zur Steuerung des Koordinatenmessgeräts 12 notwendigen Elemente, beispielsweise Tastaturen, Monitore oder eine Bedienkonsole 18 aufweisen. Des Weiteren umfasst die Steuerungseinheit 14 auch Ausgabemittel, um die durch das Koordinatenmessgerät 12 gewonnenen Daten in geeigneter Form, beispielsweise elektronisch oder in Papierform, auszugeben. Obwohl das Koordinatenmessgerät 12 mittels der Bedienkonsole 18 auch manuell bedient werden kann, ist die Steuerungseinheit 14 auch dazu in der Lage, Mess- und Kalibriervorgänge automatisiert durchzuführen.

Des Weiteren weist das System 10 eine Kraftmesseinrichtung 20, beispielsweise in Form einer Waage oder Kraftmessdose, auf. Die Kraftmesseinrichtung 20 ist auf einer Grundplatte 22 des Koordinatenmessgeräts 12 angeordnet. Die Grundplatte 22 ist horizontal ausgerichtet, so dass die Kraftmesseinrichtung 20 derart eingerichtet ist, dass sie vertikale Kräfte erfasst.

An der Grundplatte 22 ist ein Portal 24 vorgesehen, das an der Grundplatte 22 entlang an der ersten Achse (Y) verschiebbar ist. An dem Portal 24 wiederum ist ein Schlitten 26 vorgesehen, der entlang dem Portal 24 in einer zweiten Richtung (X) verschiebbar ist. An dem Schlitten 26 ist eine Pinole 28 vorgesehen, die entlang dem Schlitten 26 in eine dritte Richtung (Z) verschiebbar ist. Die drei Richtungen (X, Y, Z) stehen jeweils senkrecht aufeinander und bilden die Achsen eines absoluten Koordinatensystems (X, Y, Z).

An dem Portal 24 ist eine Skala 30 in X-Richtung, an der Grundplatte 22 eine Skala 32 in Y-Richtung und an der Pinole 28 eine Skala 34 in Z-Richtung vorgesehen. Die Skalen 30, 32, 34 dienen dazu, die Position eines an der Pinole 28 angebrachten Tastkopfs 36 auszulesen. Dazu können die Skalen 30, 32, 34 derart ausgebildet sein, dass ein manuelles Ablesen einer jeweiligen Koordinate möglich ist, insbesondere sind die Skalen 30, 32, 34 aber derart ausgebildet, dass eine jeweilige Koordinate durch eine entsprechende Erfassungseinrichtung (nicht dargestellt) erfasst und elektronisch an die Steuerungseinheit 14 übermittelt wird.

Der an der Pinole 28 angebrachte Tastkopf 36 weist eine Tastspitze 38 auf, die auslenkbar in dem Tastkopf 36 gelagert ist und zur Antastung eines zu vermessenden Objekts 40 dient.

Das zu vermessende Objekt 40 ist auf der Grundplatte 22 angeordnet und kann so durch Verfahren des Portals 24, des Schlittens 26 und der Pinole 28 angetastet und vermessen werden.

Auf der Grundplatte 22 ist des Weiteren eine Einmesskugel 41 vorgesehen, die ideal rund ist und einen bekannten Durchmesser aufweist. Die Einmesskugel 41 wird zur Kalibrierung verwendet, um eine Auslenkung der Tastspitze 38 in Koordinaten des absoluten Koordinatensystems (X, Y, Z) umrechnen zu können. Ein derartiger Kalibrierungsvorgang ist beispielsweise in der bereits eingangs genannten Druckschrift EP 1 051 596 B1 beschrieben. Durch eine solche sogenannte RDS-CAA-Kalibrierung wird eine Transformationsmatrix $T$ ermittelt, mittels der die Position der Tastspitze 38 in dem absoluten Koordinatensystem (X, Y, Z) in jeder Orientierung der Tastspitze 38 bestimmbar ist.

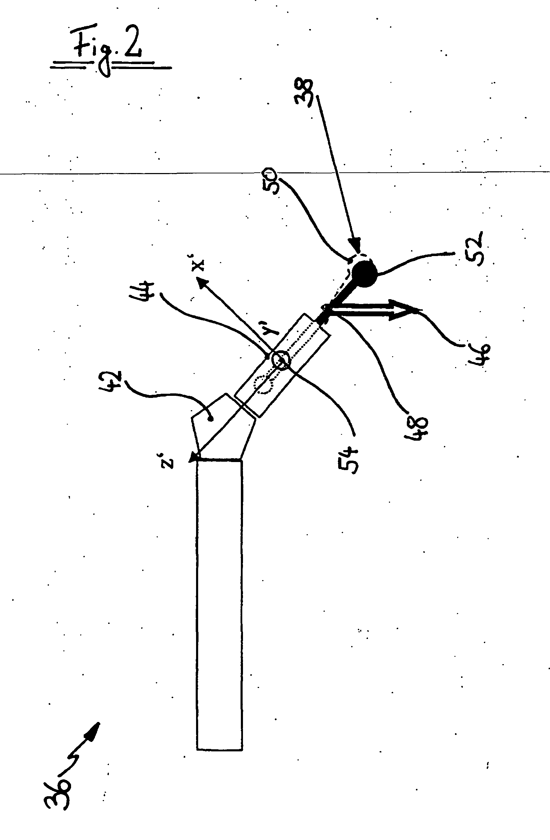

In Fig. 2 ist eine Anordnung des Tastkopfs 36 dargestellt, die zur Bestimmung einer Gewichts-Auslenkungsmatrix $G$ dient.

An der Pinole 28 ist eine Dreh-Schwenk-Einheit (DSE) 42 vorgesehen, die den Tastkopf 38 in eine gewünschte Orientierung verschwenken kann. Die DSE 42 ist derart ausgestaltet, dass zwar kein kontinuierliches Positionieren des Tastkopfs 38 möglich ist, jedoch sind Verrastungen mit derartig klein gewählten Raststufen vorgesehen, dass ein Ausrichten des Tastkopfs 38 nahezu beliebig möglich ist. An der DSE 42 ist ein Sensor 44 vorgesehen, in dem die Tastspitze 38 auslenkbar gelagert ist. Die jeweilige Auslenkung der Tastspitze 38 kann in allen drei Raumrichtungen (X, Y, Z) mittels des Sensors 44 erfasst werden. Ein Beispiel für den Aufbau eines solchen Sensors 44 findet sich beispielsweise in der bereits eingangs zitierten Druckschrift DE 10 2004 011 728 A1.

Die Gewichts-Auslenkungsmatrix $G$ wird dazu verwendet, die Auslenkung der Tastspitze 38 aufgrund einer auf die Tastspitze 38 wirkenden Gewichtskraft 46 zu berechnen. Die Gewichtskraft 46 greift in einem Schwerpunkt 48 der Tastspitze 38 an und lenkt diese um ein gewisses Maß aus einer Anfangsposition 50, im vorliegenden Fall einer gewichtsfreien Position, in eine Endposition 52, im in Fig. 2 dargestellten Fall die sog. Neutralposition, aus.

Zwar ist es grundsätzlich möglich, ein Einpendeln der Tastspitze 38 abzuwarten und die von dem Sensor 44 erfassten Signale mittels der Transformationsmatrix $T$ dabei auf die Position der Tastspitze 38 umzurechnen und so die Neutralposition 52 zu erhalten. Dazu muss die Tastspitze 38 jedoch frei im Raum ausschwingen können. Wird eine Orientierung des Tastkopfs 36 durch Bewegen der DSE 42 verändert, während die Tastspitze 38 beispielsweise ein Objekt 40 antastet, müsste ein Messvorgang zunächst abgebrochen werden und die Tastspitze 38 von dem Objekt 40 wegbewegt werden, um die Neutralposition 52 und einen sog. Eigengewichtsoffset der Daten des Sensors 44 zu bestimmen.

Mittels der Gewichts-Auslenkungsmatrix $G$ ist es möglich, die Neutralposition 52 bzw. den Eigengewichtsoffset des Sensors 44 für beliebige Orientierungen der DSE 42 zu berechnen.

Dazu wird in mindestens vier Orientierungen DSE 42 ein Ausschwingen der Tastspitze 38 abgewartet und mittels der von dem Sensor 44 erfassten Daten und der Transformationsmatrix $T$ die Neutralposition 52 in der jeweiligen Orientierung der DSE 42 bestimmt. Die Neutralposition 52 wird in einem sensorfesten Koordinatensystem 54 bestimmt. Aufgrund der bekannten Orientierung der DSE 42 kann auch die Richtung der Gravitationskraft 46 in das sensorfeste Koordinatensystem 54 transformiert werden. Aufgrund der Transformation der Kräfte und der Neutralpositionen 52 in das sensorfeste Koordinatensystem 54 ist die gewichtsfreie Position 50, die zunächst unbekannt ist, in jeder Orientierung identisch. Die gewichtsfreie Position 50 ändert sich in dem sensorfesten Koordinatensystem 54 nicht. Auf diese Weise sind die in verschiedenen Orientierungen aus der bestimmten Neutralposition 52 und dem Richtungsvektor der Gewichtskraft 46 gewonnenen Gleichungssätze miteinander kombinierbar.

Die Auslenkung der Tastspitze 38 lässt sich durch die Differenz der Endposition bzw. Neutralposition 52 von der Anfangsposition bzw. gewichtsfreien Position 50 ausdrücken. Schreibt man einen Vektor $\vec{P}$ für die Neutralposition 52 und einen Vektor $\vec{O}$ für die gewichtsfreie Position 50, ergibt sich die Auslenkung damit in der Form $\vec{P} - \vec{O}$. Somit ergibt sich die Gleichung $\vec{P} - \vec{O} = \underline{A} \cdot \vec{G}$, wobei $\underline{A}$ die Gewichts-Auslenkungsmatrix und $\vec{G}$ ein auf den Betrag 1 normierter Richtungsvektor der Gewichtskraft 46 ist. Da das genaue Gewicht der Tastspitze 38 nicht bekannt ist, findet sich der Betrag des Vektors der Gewichtskraft 46 in der Gewichts-Auslenkungsmatrix $\underline{A}$ wieder. Die Gewichts-Auslenkungsmatrix $\underline{A}$ ist somit keine Nachgiebigkeitsmatrix für beliebige Kräfte, sondern die Nachgiebigkeitsmatrix ausschließlich für die im Schwerpunkt 48 angreifende Gewichtskraft.

Eine Gleichung $\vec{P} - \vec{O} = \underline{A} \cdot \vec{G}$ bzw. $\vec{P} = \underline{A} \cdot \vec{G} + \vec{O}$ enthält somit die Gewichts-Auslenkungsmatrix $\underline{A}$ und den Vektor der gewichtsfreien Position $\vec{O}$ als Unbekannte. In einem dreidimensionalen Koordinatensystem ergibt dies zwölf Unbekannte. Jeder Gleichungssatz eines bekannten Richtungsvektors $\vec{G}$ und der dazugehörigen Neutralposition $\vec{P}$ liefert einen Satz von drei Gleichungen. Bestimmt man die Neutralposition 52 somit in mindestens vier Orientierungen, lässt sich das Gleichungssystem exakt bzw. überbestimmt lösen und so die gewichtsfreie Position $\vec{O}$ und die Gewichts-Auslenkungsmatrix $\underline{A}$ bestimmen.

Ist dies erfolgt, kann unter Kenntnis der Gewichts-Auslenkungsmatrix $\underline{A}$ und der gewichtsfreien Position $\vec{O}$ durch Einsetzen eines beliebigen, zu einer entsprechenden Orientierung der DSE 42 passenden Richtungsvektors der Gewichtskraft 46 die Neutralposition 52 berechnet werden. Man ist somit in der Lage, während eines Antastens eines Objekts 40 die Orientierung der DSE 42 zu ändern, ohne zur Bestimmung der Neutralposition 52 die Antastung des Objekts 40 zu verlassen.

Insbesondere wird es so auch möglich, aus einem einmalig durchgeführten Vorgang der Bestimmung von vier Neutralpositionen 52 die Neutralposition 52 für sämtliche Orientierungen der Tastspitze 38 im Voraus mittels der Recheneinheit 16 zu berechnen und abzuspeichern. Die entsprechende Neutralposition 52 kann dann während eines Messvorgangs schnell abgerufen werden.

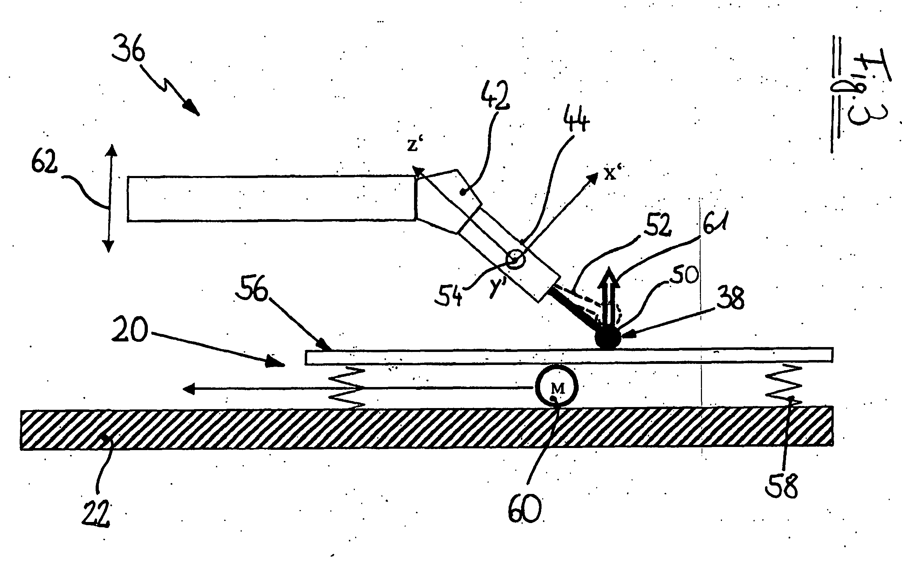

Fig. 3 zeigt eine Anordnung, mittels der eine Nachgiebigkeitsmatrix $\underline{N}$ der Tastspitze 38 aufgrund einer durch Antasten eines Objekts 40 hervorgerufene Kraft berechnet werden kann.

Grundsätzlich soll so die Nachgiebigkeitsmatrix $\underline{N}$ für beliebige, auf die Tastspitze 38 wirkende Kräfte, die durch eine Antastung hervorgerufen werden können, bestimmt werden. Daher muss im Gegensatz zu dem Vorgehen zur Bestimmung der Gewichts-Auslenkungsmatrix $\underline{A}$ auch der Betrag in dem zu lösenden Gleichungssystem vorkommenden Kräfte bekannt sein. Die Tastspitze 38 tastet dazu eine Oberfläche 56 der Kraftmesseinrichtung 20 an, die auf der Grundplatte 22 des Koordinatenmessgeräts 12 vorgesehen ist. Die Oberfläche 56 ist auf Federelementen 58 gelagert, deren Verformung von einem Messwertgeber 60 erfasst und in eine entsprechend wirkende Kraft umgerechnet wird. Auf diese Weise ist die Kraftmesseinrichtung 20 derart ausgelegt, dass eine Kraft 61, die normal auf die Oberfläche 56 wirkt, erfasst wird. Die Oberfläche 56 ist daher in einer bestimmten Orientierung der DSE 42 in einer Normalenrichtung 62 der Oberfläche 56 anzutasten, indem der Tastkopf 36 in Richtung der Normalenrichtung 62 durch Verschieben der Pinole 28 angetastet wird. Die Tastspitze 38 wird dabei aus ihrer Anfangsposition 50, die im vorliegenden Fall dann die Neutralposition ist, in die Endposition 52 ausgelenkt. In der Endposition 52 können mittels der durch den Sensor 44 erfassten Daten die Koordinaten der Tastspitze 38 in der Endposition 52 bestimmt werden. Da auch die Neutralposition 50 bekannt ist, kann mittels Differenzieren der Anfangsposition 50 und der Endposition 52 ein Auslenkungsvektor $\vec{S}$ der Tastspitze 38 bestimmt werden.

Die in der Neutralposition bzw. Anfangsposition 50 auf die Tastspitze 38 wirkende Antastkraft kann als Null definiert sein. Die in der Endposition 52 auf die Tastspitze wirkende Antastkraft 61 wird von der Kraftmesseinrichtung 20 erfasst und mittels des Messwertgebers 60 an beispielsweise die Steuerungseinheit 14 oder die Recheneinheit 16 ausgegeben. Auch die Richtung der Kraft 61 ist bekannt, da die Kraft 61 normal auf der Oberfläche 56 steht. Die Richtung der Kraft 61 ist jedoch nur bis auf den Haftreibungskegel genau bestimmbar. Entsprechend sind ein Material der Oberfläche 56 und ein Material der Tastspitze 38 so zu wählen, dass ein geringer Haftreibungskoeffizient zwischen der Tastspitze 38 und der Oberfläche 56 vorliegt und der Haftreibungskegel klein wird. Des Weiteren kann während der Antastung der Oberfläche 56 die Tastspitze 38 auf der Oberfläche 56 parallel zu dieser bewegt werden, um in die Gleitreibung überzugehen und Haftreibungseinflüsse auszuschalten. Die während dieser Bewegung von dem Messwertgeber 60 erfassten Daten können dann über die Zeit gemittelt werden, um einen exakteren Messwert der Kraft 61 in Normalenrichtung 62 zu erhalten.

Bei einem derartigen Vorgehen ist für eine bestimmte Orientierung der DSE 42 dann eine Auslenkung der Tastspitze 38 und die die Auslenkung bewirkende Kraft 61 bekannt. Man erhält somit einen Satz von drei Gleichungen der Form $\vec{S} = \underline{N} \cdot \vec{K}$, wobei der Vektor $\vec{S}$ die Auslenkung der Tastspitze 38 bezeichnet, der Vektor $\vec{K}$ die die Auslenkung $\vec{S}$ bewirkende Kraft und $\underline{N}$ die Nachgiebigkeitsmatrix der Tastspitze 38 in dem Sensor 44.

Die Nachgiebigkeitsmatrix $\underline{N}$ weist neun Unbekannte auf. Insofern ist der voranstehend beschriebene Vorgang für mindestens drei verschiedene Orientierungen der DSE 42 durchzuführen, um insgesamt mindestens neun Gleichungen zu erhalten und das entsprechende Gleichungssystem exakt oder überbestimmt lösen zu können.

Die Vektoren der Kraft 61, der Anfangsposition 50 und der Endposition 52 werden dabei in dem sensorfesten Koordinatensystem 54 beschrieben und somit auch die Nachgiebigkeitsmatrix $\underline{N}$ in dem sensorfesten Koordinatensystem berechnet. Dies geschieht, um durch Verschwenken der DSE 42 die Richtung der Antastkraft in dem sensorfesten Koordinatensystem 54 ändern zu können, wobei die Orientierung der DSE 42 in dem sensorfesten Koordinatensystem 54 zwangsläufig immer gleich bleibt.

Grundsätzlich könnte die Berechnung auch in dem absoluten Koordinatensystem (X, Y, Z) durchgeführt werden, dazu müsste jedoch bei gleicher Orientierung der DSE 42 verschieden orientierte Oberflächen 56 angetastet werden, um einen sinnvoll lösbaren Satz von Gleichungen zu erhalten. Insofern müssten dann auch mehrere Kraftmesseinrichtungen 20 vorgesehen sein, die verschieden orientiert sind. Die Bestimmung der Nachgiebigkeitsmatrix $\underline{N}$ in dem sensorfesten Koordinatensystem 54 ist somit von Vorteil.

Nachdem die Nachgiebigkeitsmatrix $\underline{N}$ bestimmt ist, kann sie selbstverständlich in das absolute Koordinatensystem (X, Y, Z) umgerechnet werden. Unter Kenntnis der Nachgiebigkeitsmatrix $\underline{N}$ kann bei einer durch den Sensor 44 erfassten Auslenkung der Tastspitze 38, die die Auslenkung bewirkende Kraft berechnet werden. Somit kann in einer beliebigen Orientierung der DSE 42 bei der Antastung eines Objekts 40 anhand der ausgelenkten Tastspitze 38 berechnet werden, mit welcher Kraft das Objekt 40 angetastet wird. Des Weiteren kann so beispielsweise während der Antastung eines Objekts die Orientierung der DSE 42 unter Beibehaltung der Antastkraft geändert werden.

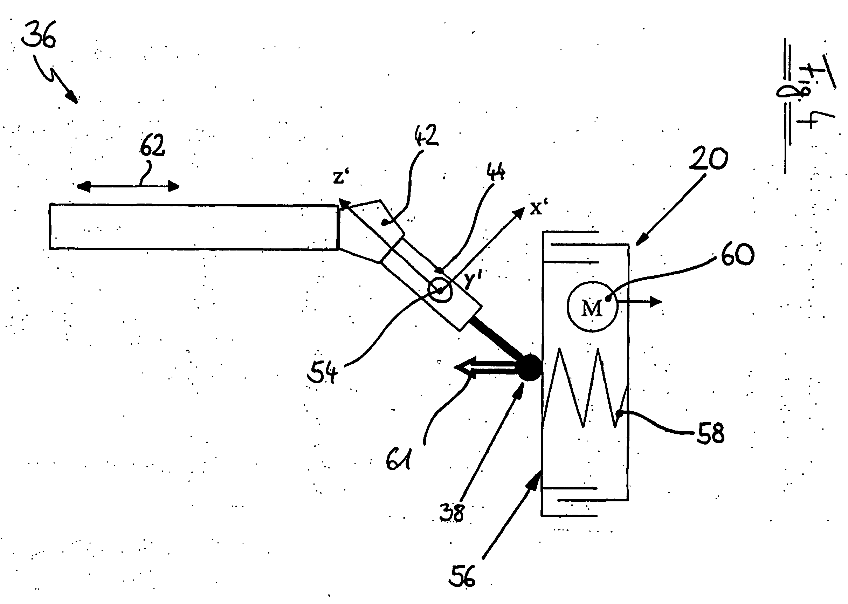

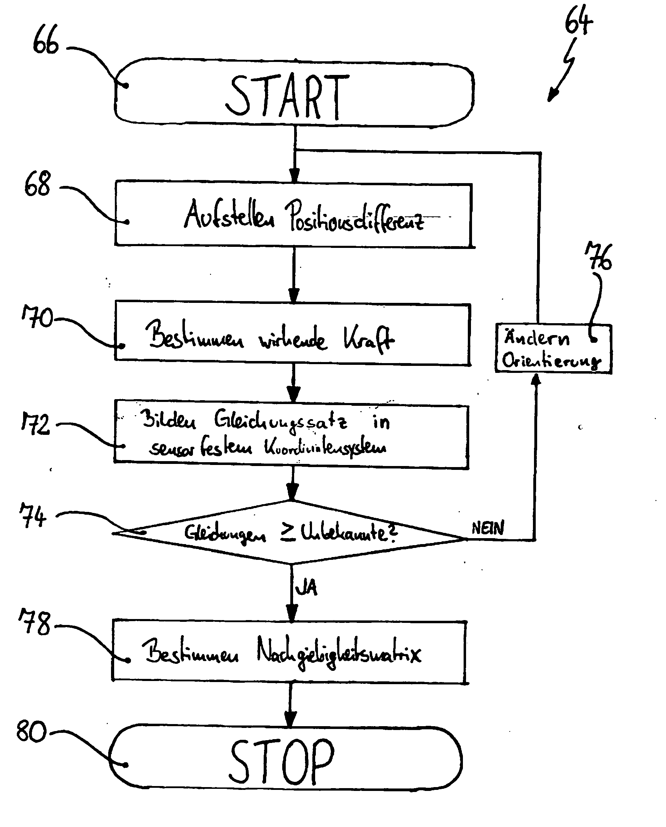

Fig. 4 zeigt einen alternativen Aufbau zu der Anordnung in Fig. 3.

In diesem Fall ist die Kraftmesseinrichtung beispielsweise eine Kraftmessdose 20', die vertikal angeordnet ist. Ihre Funktionalität entspricht jedoch derjenigen der in Fig. 3 dargestellten Kraftmesseinrichtung 20.

Mit einer derart vertikal angeordneten Kraftmessdose 20' kann das Verfahren zur Bestimmung der Nachgiebigkeitsmatrix wie mit der in Fig. 3 dargestellten Anordnung durchgeführt werden. Die in Fig. 3 dargestellte Kraftmesseinrichtung 20 und die in Fig. 4 dargestellte Kraftmesseindchtung 20' können selbstverständlich auch in Kombination verwendet werden, beispielsweise um die Nachgiebigkeitsmatrix direkt in dem absoluten Koordinatensystem (X, Y, Z) zu bestimmen.

In Fig. 5 ist ein Ablaufdiagramm eines Verfahrens 64 zur Bestimmung einer Nachgiebigkeitsmatrix schematisch und allgemein dargestellt.

Das Verfahren beginnt in einem Schritt 66. Eine Kalibrierung des Tastkopfs 38 durch Einmessen an der Einmesskugel 41 hat bereits stattgefunden, so dass durch den Sensor 44 erfasste Daten in eine Position der Tastspitze 38 umgerechnet werden können. Etwaige Nichtlinearitäten in diesem Zusammenhang wurden ebenfalls bereits bestimmt und können so berücksichtigt werden.

In einem Schritt 68 wird dann an einer ersten Orientierung eine Positionsdifferenz zwischen der Anfangsposition 50 und der Endposition 52 aufgestellt. Dabei muss die Anfangsposition nicht notwendigerweise bekannt sein, sondern kann auch eine Unbekannte bilden. Zumindest die Endposition 52 der Tastspitze 38 kann jedoch anhand der erfassten Daten des Sensors 44 bestimmt werden.

In einem Schritt 70 wird dann eine die Positionsdifferenz, die in Schritt 68 aufgestellt wurde, bewirkende Kraft bestimmt. Dabei muss diese Kraft nicht notwendigerweise sowohl in ihrem Betrag als auch ihrer Richtung nach bekannt sein. Es genügt, wenn die Richtung der Kraft bestimmt werden kann. Ist auch der Betrag der wirkenden Kraft bekannt, kann eine Nachgiebigkeitsmatrix anschließend für Kräfte beliebigen Betrags bestimmt werden. Ist der Betrag der Kraft nicht bekannt, findet sich dieser in der anschließend bestimmten Nachgiebigkeitsmatrix wieder, so dass die Nachgiebigkeitsmatrix dann nur speziell für eine bestimmte Kraft bestimmten Betrags bestimmt werden kann.

Anschließend wird in einem Schritt 72 ein die aufgrund der Kraft bewirkte Positionsdifferenz beschreibender Gleichungssatz in einem sensorfesten Koordinatensystem gebildet. In dem Gleichungssatz sind Unbekannte die Nachgiebigkeitsmatrix und möglicherweise die Anfangsposition 50. Anschließend wird in einem Schritt 74 verglichen, ob die Anzahl der gebildeten Gleichungen größer oder gleich der Anzahl der Unbekannten ist. Alternativ kann auch vorgesehen sein, dass unter Kenntnis der Anzahl der Unbekannten eine bestimmte Anzahl von Gleichungen als Zielgröße vorgegeben wird, um das Gleichungssystem um ein vorbestimmtes Maß überzubestimmen. Entsprechend würde die Abfrage dann dahingehend stattfinden, ob die Anzahl der Gleichungen größer gleich eines gewissen Werts x ist.

Falls die Abfrage in Schritt 74 negativ ausfällt, wird in einem Schritt 76 die Orientierung des Tastkopfs 36 an der DSE 42 geändert und die Schritte 68, 70 und 72 wiederholt.

Falls die Abfrage in Schritt 74 positiv ausfällt, ist das Gleichungssystem wie gewünscht lösbar und die entsprechende Nachgiebigkeitsmatrix wird in einem Schritt 78 bestimmt.

Das Verfahren endet anschließend in einem Schritt 80.

**Patentansprüche**

**1.** Verfahren (64) zum Bestimmen einer Nachgiebigkeitsmatrix $\underline{M}$ eines mit einer Tastspitze (38) versehenen Sensors (44) eines Koordinatenmessgeräts (12), wobei die Tastspitze (38) in mehrere Orientierungen ausrichtbar ist und das Koordinatenmessgerät (12) derart kalibriert ist, dass eine Position der Tastspitze (38) mittels des Sensors (44) bestimmbar ist, **gekennzeichnet durch** die folgenden Schritte:

Aufstellen (68) eines **durch** Differenzieren einer Anfangsposition (50) und einer Endposition (52) gebildeten Auslenkungsvektors $\vec{D}$ der Tastspitze (38) in einer ersten Orientierung in einem sensorfesten Koordinatensystem (54), wobei zumindest die Endposition (52) der Tastspitze (38) **durch** den Sensor (44) bestimmt wird,
Bestimmen (70) zumindest einer Richtung eines Vektors $\vec{F}$ einer den Auslenkungsvektor $\vec{D}$ bewirkenden Kraft (46, 61) in dem sensorfesten Koordinatensystem (54),
Bilden (72) eines Satzes mehrerer Gleichungen in dem sensorfesten Koordinatensystem (54), wobei der Satz in eine Form $\vec{D} = \underline{M} \cdot \vec{F}$ bringbar ist und eine Anzahl von Unbekannten aufweist,
Wiederholen (74, 76) der voranstehenden Schritte in weiteren Orientierungen der Tastspitze (38), bis eine Anzahl der Gleichungen mindestens der Anzahl von Unbekannten entspricht,
Bestimmen (78) der Unbekannten **durch** Lösen der Gleichungen.

2. Verfahren nach Anspruch 1, wobei die Nachgiebigkeitsmatrix $\underline{M}$ eine durch eine in einem Schwerpunkt (48) der Tastspitze (38) angreifende Gravitationskraft (46) bewirkte Gewichts-Auslenkungsmatrix A ist, der Vektor $\vec{F}$ ein normierter Richtungsvektor $\vec{G}$ der Gravitationskraft (46) ist, die Endposition (52) eine Neutralposition $\vec{P}$ der Tastspitze (38) ist und die Anfangsposition (50) eine unbekannte gewichtsfreie Position $\vec{O}$ der Tastspitze (38) ist, so dass sich für jeden Satz mehrerer Gleichungen eine Form $\vec{P} = \underline{A} \cdot \vec{G} + \vec{O}$ ergibt, und wobei die Schritte des Aufstellens (68), des Bestimmens (70) und des Bildens (72) in mindestens vier Orientierungen durchgeführt werden.

3. Verfahren nach Anspruch 1, wobei die Nachgiebigkeitsmatrix $\underline{M}$ eine durch eine an der Tastspitze (38) des Sensors (44) angreifende Kraft $\vec{K}$ bewirkte Nachgiebigkeitsmatrix $\underline{N}$ ist, wobei die Endposition (52) eine durch eine Kraft $\vec{K}_2$ bewirkte Position $\vec{S}_2$ und die Anfangsposition (50) eine durch eine Kraft $\vec{K}_1$ bewirkte Position $\vec{S}_1$ ist, wobei die Kraft $\vec{K}$ den Vektor $\vec{F}$ bildet und durch Differenzieren der Kräfte $\vec{K}_2$ und $\vec{K}_1$ in ihrer Richtung und in ihrem Betrag bestimmt wird, wobei eine Positionsdifferenz $\vec{S}$ eine Differenz der Positionen $\vec{S}_2$ und $\vec{S}_1$ ist und den Vektor $\vec{D}$ bildet, so dass sich für jeden Satz mehrerer Gleichungen eine Form $\vec{S} = \underline{N} \cdot \vec{K}$ ergibt, und wobei die Schritte des Aufstellens (68), des Bestimmens (70) und des Bildens (72) in mindestens drei Orientierungen durchgeführt werden.

4. Verfahren nach Anspruch 3, wobei die Tastspitze (38) des Sensors (44) zumindest in der Position $\vec{S}_2$ normal auf eine Oberfläche (56) einer Kraftmesseinrichtung (20) gedrückt wird, und wobei von der Kraftmesseinrichtung (20) die Kräfte bestimmt und an das Koordinatenmessgerät (12) übermittelt werden.

5. Verfahren nach Anspruch 3 oder 4, wobei die Kraft $\vec{K}_1$ gleich Null ist und die Position $\vec{S}_1$ einer Neutralposition $\vec{P}$ in der entsprechenden Orientierung entspricht.

6. Verfahren nach Anspruch 4 oder 5, wobei die Tastspitze (38) parallel zu der Oberfläche (56) der Kraftmesseinrichtung bewegt wird, wenn die Tastspitze (38) auf die Oberfläche (56) gedrückt wird, und die Kräfte $\vec{K}_2$ bzw. $\vec{K}_1$ durch eine Mittelung bestimmt werden.

7. Verfahren nach einem der Ansprüche 1 bis 6, wobei die erste Orientierung und die weiteren Orientierungen derart gewählt werden, dass sie nicht in einer Ebene liegen.

8. Verfahren nach einem der Ansprüche 1 bis 7, wobei die Schritte des Aufstellens (68), des Bestimmens (70) und des Bildens (72) so oft wiederholt werden, bis die Anzahl der Gleichungen größer als die Anzahl der Unbekannten ist, und wobei ein Bestimmen (78) der Unbekannten mittels einer Methode der kleinsten Quadrate durchgeführt wird.

9. Computerprogrammprodukt mit Programmcodemitteln, die auf einem computerlesbaren Datenträger gespeichert sind, um ein Verfahren (64) nach einem der Ansprüche 1 bis 8 durchzuführen, wenn das Computerprogramm auf einem Computer oder einer entsprechenden Recheneinheit (16) ausgeführt wird.

10. System (10) zum Bestimmen einer Nachgiebigkeitsmatrix eines mit einer Tastspitze (38) versehenen Sensors (44) eines Koordinatenmessgeräts (12), wobei das System das Koordinatenmessgerät (12), eine Steuerungseinheit (14) zum Steuern des Koordinatenmessgeräts (12) und eine Kraftmesseinrichtung (20) aufweist, die gemessene Kräfte an die Steuerungseinheit (14) ausgibt, wobei die Steuerungseinheit (14) derart ausgestaltet ist, dass sie ein Verfahren (64) nach einem der Ansprüche 1 bis 8 ausführt.

11. System nach Anspruch 10, wobei die Tastspitze (38) ein erstes Material und die Oberfläche (56) aus einem zweiten Material aufweist und zwischen dem ersten Material und dem zweiten Material ein geringer Haftreibungskoeffizient vorliegt.

## Claims

1. Method (64) for determining a compliance matrix $\underline{M}$ of a sensor (44), provided with a probe tip (38), of a coordinate measuring machine (12), the probe tip (38) being alignable in a plurality of orientations, and the coordinate measuring machine (12) being calibrated in such a way that a position of the probe tip (38) can be determined by means of the sensor (44), **characterized by** the following steps:

   erecting (68) a deflection vector $\vec{D}$, formed by differentiating an initial position (50) and a final position (52), of the probe tip (38) in a first orientation in a sensor-fixed coordinate system (54), at least the final position (52) of the probe tip (38) being determined by the sensor (44),
   determining (70) at least one direction of a vector $\vec{F}$ of a force (46, 61) effecting the deflection vector $\vec{D}$, in the sensor-fixed coordinate system (54),
   forming (72) a set of a plurality of equations in the sensor-fixed coordinate system (54), the set being capable of casting into a form $D = \underline{M} \cdot F$ and having a number of unknowns,
   repeating (74, 76) the above steps in further orientations of the probe tip (38) until a number of equations corresponds to at least the number of unknowns, and
   determining (78) the unknowns by solving the equations.

2. Method according to Claim 1, in which the compliance matrix $\underline{M}$ is a weight deflection matrix $\underline{A}$, effected by a gravitational force (46) acting at a centroid (48) of the probe tip (38), the vector $\vec{F}$ is a normalized direction vector $G$ of the gravitational force (46), the final position (52) is a neutral position $P$ of the probe tip (38), and the initial position (50) is an unknown weightless position $O$ of the probe tip (38) such that a form $\vec{P} = \underline{A} \cdot \vec{G} + \vec{O}$ results for each set of a plurality of equations, and in which the steps of erecting (68), determining (70) and forming (72) are carried out in at least four orientations.

3. Method according to Claim 1, in which the compliance matrix $\underline{M}$ is a compliance matrix N effected by a force $\vec{K}$ acting on the probe tip (38) of the sensor (44), in which the final position (52) is a position $S_2$ effected by a force $K_2$ and the initial position (50) is a position $S_1$ effected by a force $K_1$, in which the force $K$ forms the vector $F$ and is determined in its direction and in its amplitude by differentiating the forces $K_2$ and $K_1$, in which a position difference $S$ is a difference in the positions $S_2$ and $S_1$ and forms the vector $D$ such that a form $S = \underline{N} \cdot K$ results for each set of a plurality of equations, and the steps of erecting (68), determining (70) and forming (72) are carried out at least in three orientations.

4. Method according to Claim 3, in which, at least in the position $\vec{S}_2$, the probe tip (38) of the sensor (44) is pressed normally onto a surface (56) of a force measuring device (20), and in which the force measuring device (20) determines the forces and transmits them to the coordinate measuring machine (12).

5. Method according to Claim 3 or 4, in which the force $\vec{K}_1$ vanishes, and the position $\vec{S}_1$ corresponds to a neutral position $P$ in the corresponding orientation.

6. Method according to Claim 4 or 5, in which the probe tip (38) is moved parallel to the surface (56) of the force measuring device when the probe tip (38) is pressed onto the surface (56), and the forces $\vec{K}_2$ and $\vec{K}_1$ are determined by averaging.

7. Method according to one of Claims 1 to 6, in which the first orientation and the further orientations are selected in such a way that they do not lie in one plane.

8. Method according to one of Claims I to 7, in which the steps of erecting (68), determining (70) and forming (72) are repeated until the number of the equations is greater than the number of unknowns, and a determination (78) of the unknowns is carried out by means of a method of least squares.

9. Computer program product with program code means which are stored on a computer-readable data carrier, in order to carry out a method (64) according to one of Claims I to 8, when the computer program is executed on a computer or an appropriate arithmetic logic unit (16).

10. System (10) for determining a compliance matrix of a sensor (44), provided with a probe tip (38), of a coordinate measuring machine (12), in which the system has the coordinate measuring machine (12), a control unit (14) for controlling the coordinate measuring machine (12) and a force measuring device (20) which outputs the measured forces to the control unit (14), the control unit (14) being configured in such a way that it executes a method (64) according to one of Claims 1 to 8.

11. System according to Claim 10, wherein the probe tip (38) has a first material and the surface (56) from a second material, and wherein there is a low static friction coefficient between the first material and the second material.

**Revendications**

1. Procédé (64) pour déterminer une matrice d'élasticité $\underline{M}$ d'un capteur (44) muni d'un palpeur (38) d'un appareil de mesure de coordonnées (12), le palpeur (38) pouvant être dirigé selon plusieurs orientations et l'appareil de mesure de coordonnées (12) étant calibré de manière à ce qu'une position du palpeur (38) puisse être déterminée à l'aide du capteur (44), **caractérisé par** les étapes suivantes :

   établir (68), par différenciation d'une position de départ (50) et d'une position finale (52), un vecteur de déviation $\vec{D}$ du palpeur (38) dans une première orientation dans un système de coordonnées (54) solidaire du capteur, au moins la position finale (52) du palpeur (38) étant déterminée par le capteur (44),
   déterminer (70) au moins une direction d'un vecteur $\vec{F}$ d'une force (46, 61) produisant le vecteur de déviation $\vec{D}$ dans le système de coordonnées (54) solidaire du capteur,
   former (72) un jeu de plusieurs équations dans le système de coordonnées (54) solidaire du capteur, le jeu pouvant être mis sous une forme $\vec{D} = \underline{M} \cdot \vec{F}$ et présentant un certain nombre d'inconnues,
   répéter (74, 76) les étapes susmentionnées dans d'autres orientations du palpeur (38) jusqu'à ce qu'un nombre d'équations corresponde au moins au nombre d'inconnues,
   déterminer (78) les inconnues par résolution des équations.

2. Procédé selon la revendication 1, dans lequel la matrice d'élasticité $\underline{M}$ est une matrice de déviation de poids $\underline{A}$ produite grâce à une force de gravitation (46) s'appliquant à un centre de gravité (48) du palpeur (38), le vecteur $\vec{F}$ étant un vecteur de direction $G$ normalisé de la force de gravitation (46), la position finale (52) étant une position neutre $\vec{P}$ du palpeur (38) et la position de départ (50) étant une position sans poids inconnue $O$ du palpeur (38), de sorte que l'on obtient pour chaque jeu de plusieurs équations une forme $\vec{P} = \underline{A} \cdot \vec{G} + \vec{O}$, et moyennant quoi les étapes consistant à établir (68), à déterminer (70) et à former (72) sont réalisées dans au moins quatre orientations.

3. Procédé selon la revendication 1, dans lequel la matrice d'élasticité $\underline{M}$ est une matrice d'élasticité $\underline{N}$ produite grâce à une force $\vec{K}$ appliquée sur le palpeur (38) du capteur (44), la position finale (52) étant une position $\vec{S}_2$ produite par une force $\vec{K}_2$ et la position de départ (50) étant une position $\vec{S}_1$ produite par une force $\vec{K}_1$, la force $K$ formant le vecteur $\vec{F}$ et étant déterminée grâce à une différenciation des forces $\vec{K}_2$ et $\vec{K}_1$ concernant sa direction et son intensité, une différence de positions $\vec{S}$ étant une différence des positions $\vec{S}_1$ et $\vec{S}_2$ formant le vecteur $\vec{D}$, de sorte que pour chaque jeu de plusieurs équations on obtient une forme $\vec{S} = \underline{N} \cdot \vec{K}$, et les étapes consistant à établir (68), à déterminer (70) et à former (72) étant réalisées dans au moins trois orientations.

4. Procédé selon la revendication 3, dans lequel on appuie avec le palpeur (38) du capteur (44), au moins dans la position $\vec{S}_2$, de manière normale sur une surface (56) d'un dispositif de mesure de force (20), et les forces sont déterminées par le dispositif de mesure de force (20) et étant transmises à l'appareil de mesure de coordonnées (12).

5. Procédé selon les revendications 3 ou 4, dans lequel la force $\vec{K}_1$ est égale à zéro et la position $\vec{S}_1$ correspond à une position neutre $\vec{P}$ dans l'orientation correspondante.

6. Procédé selon les revendications 4 ou 5, dans lequel le palpeur (38) est déplacé parallèlement à la surface (56) du dispositif de mesure de force lorsque l'on appuie avec le palpeur (38) sur la surface (56), et les forces $\vec{K}_2$ ou $\vec{K}_1$ sont déterminées grâce au calcul de la moyenne.

7. Procédé selon l'une des revendications 1 à 6, dans lequel la première orientation et les autres orientations sont choisies de manière à ne pas se situer dans un plan.

**8.** Procédé selon l'une des revendications 1 à 7, dans lequel les étapes consistant à établir (68), à déterminer (70) et à former (72) sont répétées aussi souvent que nécessaire pour que le nombre d'équations soit supérieur au nombre d'inconnues, et une détermination (78) des inconnues est réalisée à l'aide d'une méthode des moindres carrés.

**9.** Produit de programme informatique avec des moyens de codage de programme, lesquels sont enregistrés sur un support de données lisible par informatique afin de mettre en oeuvre un procédé (64) selon l'une des revendications 1 à 8 lorsque le programme informatique est exécuté sur un ordinateur ou une unité de calcul (16) correspondante.

**10.** Système (10) pour déterminer une matrice d'élasticité d'un capteur (44) muni d'un palpeur (38) d'un appareil de mesure de coordonnées (12), le système présentant l'appareil de mesure de coordonnées (12), une unité de commande (14) pour commander l'appareil de mesure de coordonnées (12) et un dispositif de mesure de force (20) qui délivre les forces mesurées à l'unité de commande (14), l'unité de commande (14) étant réalisée de manière à mettre en oeuvre un procédé (64) selon l'une des revendications 1 à 8.

**11.** Système selon la revendication 10, dans lequel le palpeur (38) présente un premier matériau et la surface (56) en un deuxième matériau, et un faible coefficient de friction statique règne entre le premier matériau et le deuxième matériau.

Fig.1

Fig. 2

Fig.3

$Fig. 4$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004106854 A1
- EP 1279918 A2
- DE 102004011728 A1
- EP 1051596 B1
- DE 19724739 A1
- DD 140788 A